# EUROPEAN PATENT APPLICATION

(11) **EP 4 734 170 A1**
(43) Date of publication of application: **29.04.2026**
(21) Application number: 24772912.2
(22) Date of filing: 09.08.2024
(51) Int. Cl.: H01M 4/36, H01M 4/58, H01M 4/62, C01G 49/00, H01M 4/04, H01M 4/1397, H01M 10/054, H01M 4/38

(54) **SODIUM FERROUS SULFATE POSITIVE ELECTRODE MATERIAL AND PREPARATION METHOD THEREFOR, POSITIVE ELECTRODE SHEET AND SECONDARY BATTERY**

(30) Priority: 01.08.2024 CN 202411055731
(71) Applicant: Hubei Wanrun New Energy Technology Co., Ltd., Shiyan, Hubei 442500 (CN)
(72) Inventor: WANG, Qin, Shiyan, Hubei 442500 (CN); MA, Weijia, Shiyan, Hubei 442500 (CN); LIAO, Yaodong, Shiyan, Hubei 442500 (CN); LV, Fei, Shiyan, Hubei 442500 (CN); DENG, Zhibin, Shiyan, Hubei 442500 (CN)
(74) Representative: Barker Brettell LLP
(86) International application number: PCT/CN2024/111204
(87) International publication number: WO 2026/025534

(57) **Abstract**

The present application belongs to the technical field of secondary batteries, and provides a sodium ferrous sulfate cathode material and a preparation method therefor, a cathode sheet, and a secondary battery; wherein the sodium ferrous sulfate cathode material comprises a core layer and a shell layer, the material of the core layer comprises sodium ferrous sulfate, and the material of the shell layer is a carbon material, wherein the thickness of the shell layer is 2 nm-10 nm; and the Raman spectrum of the sodium ferrous sulfate cathode material has a D peak and a G peak, and the I_{D}/I_{G} value is (0.8-1):1. The sodium ferrous sulfate cathode material provided in the present application has good electrical conductivity and a relatively high charge specific capacity and discharge specific capacity, thus having good electrochemical properties.

## Description

### Cross-Reference to Related Application

The present application claims the right of priority on the basis of Chinese Patent Application No. 2024110557316, filed with the China National Intellectual Property Administration on August 01, 2024 and application name "sodium ferrous sulfate cathode material and preparation method therefor, cathode sheet, and secondary battery", all contents of which are incorporated by reference in this application.

### Technical Field

The present application relates to the technical field of secondary batteries, and in particular, to a sodium ferrous sulfate cathode material and a preparation method therefor, a cathode sheet, and a secondary battery.

### Background

Lithium ion batteries, by virtue of excellent electrochemical properties, have been widely applied in the fields of mobile phones, notebook computers, new energy automobiles and the like, and belong to an ideal energy storage technology. However, globally, the distribution of lithium resources is extremely uneven, with about 70% distributed in South America, resulting in higher production costs. Therefore, it is urgent to provide a new energy storage battery technology to reduce adverse effects caused by shortage of lithium resources.

At present, researches have shown that sodium ion batteries also have certain functions of storing and releasing electrical energy, and compared with lithium salts, sodium salts have more abundant storage and less cost. The price of sodium ferrous sulfate is relatively low and the voltage is high; however, the conductivity of sodium ferrous sulfate is relatively poor. Currently, a conventional processing method improves the conductivity thereof by means of carbon coating, but cannot effectively improve the charge specific capacity and discharge specific capacity of a sodium ferrous sulfate cathode material, and thus the application of the sodium ferrous sulfate cathode material is limited.

### Summary

In view of the technical problems existing in the background art, the present application provides a sodium ferrous sulfate cathode material and a preparation method therefor, a cathode sheet, and a secondary battery, which are intended to solve the technical problem of poor conductivity of a sodium ferrous sulfate cathode material.

In a first aspect, an embodiment of the present application provides a sodium ferrous sulfate cathode material, comprising a core layer and a shell layer, wherein the material of the core layer comprises sodium ferrous sulfate, and the material of the shell layer is a carbon material; a thickness of the shell layer is 2 nm-10 nm; and a Raman spectrum of the sodium ferrous sulfate cathode material has a D peak and a G peak, and the I_{D}/I_{G} value is (0.8-1):1.

In the technical solutions of the embodiment of the present application, by designing the structure of the sodium ferrous sulfate cathode material, the surface of the core layer of the sodium ferrous sulfate is coated with a carbon material shell layer having a relatively high degree of graphitization, which helps to improve the conductivity of the sodium ferrous sulfate cathode material.

In some embodiments, the thickness of the shell layer is 2 nm-5 nm.

In these embodiments, by further optimizing the thickness of the shell layer, sodium ions are easily deintercalated from the sodium ferrous sulfate cathode material, thereby facilitating improvement of the specific charging capacity and the specific discharging capacity of a battery using the sodium ferrous sulfate cathode material.

In some embodiments, the I_{D}/I_{G} value in the Raman spectrum of the sodium ferrous sulfate cathode material is (0.9-1):1.

In these embodiments, the values of the D peak and the G peak are further controlled, so that the content of amorphous carbon is increased, which helps to increase the specific surface area of the sodium ferrous sulfate cathode material and improve the wettability of the sodium ferrous sulfate cathode material to an electrolyte when applied to a battery.

In some embodiments, the sodium ferrous sulfate cathode material has a D50 particle size of 0.5 µm-5 µm and a BET specific surface area of 10 m²/g-25 m²/g.

In these embodiments, controlling the D50 particle size and the BET specific surface area of the ferrous sulfate sodium cathode material can improve the processability, make it easier to prepare an uniform slurry, and improve the comprehensive electrochemical performance of the battery.

In some embodiments, the mole ratio of sodium element to that of iron element in the sodium ferrous sulfate cathode material is (2-2.5):1.

In these embodiments, by controlling the mole ratio of sodium element to iron element, the capacity of the battery to which the sodium ferrous sulfate cathode material is applied can be further improved.

According to a second aspect, an embodiment of the present application provides a preparation method for the sodium ferrous sulfate cathode material, comprising the following steps:
subjecting a sodium sulfate-based organic material or a mixture of the sodium sulfate-based organic material and a carbon source to first calcination to obtain a carbon coating material; wherein the sodium sulfate-based organic material has an alkyl group;
mixing the carbon coating material and a ferrous salt to obtain a mixed material; and
subjecting the mixed material to second calcination to obtain the sodium ferrous sulfate cathode material;
wherein the carbon source is selected from carbon materials different from the sodium sulfate-based organic material; and
the sodium ferrous sulfate cathode material comprises a core layer and a shell layer, the material of the core layer comprises sodium ferrous sulfate, the material of the shell layer is a carbon material, the thickness of the shell layer is 2 nm-10 nm, the Raman spectrum of the sodium ferrous sulfate cathode material has a D peak and a G peak, and the I_{D}/I_{G} value is (0.8-1):1.

In this embodiment, a sodium sulfate-based organic material or a mixture of the sodium sulfate-based organic material and a carbon source and a ferrous salt are used as raw materials, and two calcinations are performed to obtain a sodium ferrous sulfate cathode material having a shell thickness of 2 nm-10 nm, an I_{D}/I_{G} value of (0.8-1):1, and improved conductivity.

In some embodiments, the preparation method for the sodium ferrous sulfate cathode material is used to prepare a sodium ferrous sulfate cathode material as described above.

In some embodiments, the sodium sulfate-based organic material is sodium alkyl sulfate having 10-20 carbon atoms.

Selecting sodium alkyl sulfate having 10-20 carbon atoms as the sodium sulfate-based organic material can form a sodium sulfate material coated with carbon in situ after the first calcination. The sodium sulfate material coated with carbon has a good carbon coating effect, and is beneficial for improving the wettability of the electrolyte on the sodium ferrous sulfate cathode material, thereby improving the charging performance and discharging performance of a battery prepared by using the cathode material.

In some embodiments, a temperature for the first calcination is 600°C-700°C, and a temperature holding time for the first calcination is 2 h-4 h; and a temperature for the second calcination is 300°C-350°C, and the temperature holding time for the second calcination is in the range of 20 h-30 h.

In these embodiments, by controlling the conditions of the first calcination and the second calcination, it is beneficial for allowing ferrous ions entering the core layer and undergoing a solid phase reaction with material sodium sulfate of the core layer formed by the first calcination at a low temperature to generate sodium ferrous sulfate.

In some embodiments, a heating rate for the first calcination is 4°C/min-6°C/min, a heating rate for the second calcination is 1°C/min-2°C/min, and the first calcination and the second calcination are carried out in an inert atmosphere.

In these embodiments, the heating rates during the first calcination and the second calcination are controlled, which facilitates more uniform heating of the material, more sufficient reaction, and lower thermal stress inside the material.

In some embodiments, the ambient humidity during the first calcination is 5%-10%, and the ambient humidity during the second calcination is within 5%.

In these embodiments, the control of the ambient humidity is advantageous in reducing the loss amount of the carbon material.

In some embodiments, before the second calcination, the mixed material is subjected to a pulverization treatment, and the particle size of the mixed material after the pulverization treatment is 1 µm-3 µm.

In these embodiments, by controlling the particle size of the mixed material, the diffusion path of ferrous ions is shortened, and the yield of the sodium ferrous sulfate cathode material is improved.

In some embodiments, the sodium alkyl sulfate having 10-20 carbon atoms is at least one of sodium dodecyl sulfate, sodium cetyl sulfate, sodium octadecyl sulfate, and sodium eicosyl sulfate; and/or the carbon source is at least one of glucose, sucrose, water-soluble starch, and fructose; and the ferrous salt is at least one of ferrous acetate and ferrous oxalate.

It is easy to prepare a sodium ferrous sulfate cathode material having a moderate thickness of the shell layer by using the sodium alkyl sulfate having 10-20 carbon atoms as a raw material. The above-mentioned carbon source is a material commonly used for preparing a carbon coating layer, and can be easily obtained. The selection of ferrous acetate and ferrous oxalate as the ferrous salt does not introduce other impurities.

According to a third aspect, an embodiment of the present application provides a cathode sheet, comprising a current collector, a cathode active material, a conductive agent, and a binder. The cathode active material is the sodium ferrous sulfate cathode material of the first aspect of the present application or the sodium ferrous sulfate cathode material prepared by using the preparation method of the second aspect of the present application, and therefore has a high charge specific capacity and discharge specific capacity.

In a fourth aspect, an embodiment of the present application provides a secondary battery, comprising a cathode sheet, a separator, an electrolyte, and a negative electrode sheet according to the third aspect of the present application, and therefore the secondary battery has good electrochemical properties.

The above description is only an overview of the technical solutions of the present application. In order to more clearly understand the technical means of the present application and implement the present application according to the content of the description, and in order to make the above and other objects, features and advantages of the present application more obvious and easy to understand, the specific embodiments of the present application are specifically listed below.

### Brief Description of the Drawings

To describe the technical solutions of the present application more clearly, the following briefly introduces the accompanying drawings used in the present application. Apparently, the accompanying drawings in the following description show merely some embodiments of the present application, and a person skilled in the art may still derive other drawings from these accompanying drawings without creative efforts.
Fig. 1 is a surface SEM image of a sodium ferrous sulfate cathode material in Example 1;
Fig. 2 is a surface SEM image of a sodium ferrous sulfate cathode material in Example 2;
Fig. 3 is a surface SEM image of a sodium ferrous sulfate cathode material in Example 3;
Fig. 4 is an XRD pattern result of the sodium ferrous sulfate cathode material of Example 1 and Example 2;
Fig. 5 is a TEM image of the sodium ferrous sulfate cathode material in Example 1;
Fig. 6 is a TEM image of the sodium ferrous sulfate cathode material in Example 2;
Fig. 7 is a Raman spectrum graph of the sodium ferrous sulfate cathode material in Example 1;
Fig. 8 is a Raman spectrum graph of the sodium ferrous sulfate cathode material in Example 2;
Fig. 9 is a diagram of test results of specific charging capacity and specific discharging capacity of a battery prepared from the sodium ferrous sulfate cathode material in Example 1 at a rate of 0.1 C and 0.5 C; and
Fig. 10 is a diagram of test results of specific charging capacity and specific discharging capacity of a battery prepared from the sodium ferrous sulfate cathode material in Example 2 and Example 3 at a rate of 0.1C.

### Detailed Description of the Embodiments

The following describes the embodiments of the technical solutions of the present application in detail with reference to the accompanying drawings. The following embodiments are only intended to describe the technical solutions of the present application more clearly, and therefore are only examples, but are not intended to limit the scope of protection of the present application.

Unless otherwise defined, all technical and scientific terms used herein have the same meaning as commonly understood by a person skilled in the art to which this application belongs. The terms used herein are for the purpose of describing particular embodiments only and are not intended to be limiting of the application. The terms "comprising" and "having" and any variations thereof in the description, claims, and drawings of the present application, are intended to indicate non-exclusive inclusion.

In the description of the embodiments of the present application, the technical terms "first", "second", etc. are only used for distinguishing different objects, and cannot be understood as indicating or implying relative importance or implicitly indicating the number of indicated technical features, a specific order or a primary relationship. In the description of the embodiments of the present application, "a plurality of" means two or more, unless specified otherwise.

Reference herein to "an embodiment" means that a particular feature, structure, or characteristic described in combination with the embodiment can be included in at least one embodiment of the present disclosure. The appearance of this phrase in various places in the description does not necessarily refer to the same embodiment or independent or alternative embodiments mutually exclusive of other embodiments. It is apparent and implicitly understood by a person skilled in the art that the embodiments described herein can be combined with other embodiments.

**In** the description of the embodiments of the present application, the term "and/or" is only an association relationship for describing associated objects, indicating that three relationships may exist, for example, A and/or B may indicate three cases: A exists separately, A and B exist simultaneously, and B exists separately. **In** addition, the character "/" in this description generally indicates that the associated objects are in an "or" relationship.

**In** the description of the embodiments of the present application, the term "a plurality of" refers to two or more (including two), and by the same reasoning, "a plurality of groups" refers to two or more groups (including two), and "a plurality of pieces" refers to two or more pieces (including two pieces).

In the description of the embodiments of the present application, the orientation or position relationships indicated by the technical terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are based on the orientation or position relationships shown in the figures, and are only for the convenience of describing the embodiments of the present application and simplifying the description, rather than indicating or implying that the indicated device or element must have a specific orientation and be constructed and operated in a specific orientation. Therefore, the embodiments of the present disclosure should not be construed as being limited thereto.

In the description of the embodiments of the present application, unless specified or limited otherwise, the technical terms "mounted", "in connection with", "connected", "fixed", etc. should be understood broadly, for example, may refer to fixed connection, detachable connections, or integral connections; may also refer to mechanical or electrical connections; may also refer to direct connections or indirect connections via intervening structures; and may also refer to inner communications of two elements or interaction relationships between two elements. A person of ordinary skill in the art may understand the specific meanings of the terms above in the embodiments of the present application according to specific situations.

Compared with lithium resources, sodium resources are more abundant, cost less, and have higher application prospects in the field of energy storage. Sodium ferrous sulfate is a common cathode material for sodium ion batteries, but its conductivity is poor. Currently, carbon coating methods are generally used to improve the conductivity of sodium ferrous sulfate. However, the improvement effect is limited, and the properties, such as the charge specific capacity and the discharge specific capacity, of a battery using the sodium ferrous sulfate as a cathode material cannot be significantly improved.

In order to solve the technical problem of poor conductivity of a sodium ferrous sulfate cathode material, the present application provides a sodium ferrous sulfate cathode material and a preparation method therefor, a cathode sheet, and a secondary battery; wherein the sodium ferrous sulfate cathode material comprises a core layer and a shell layer, the material of the core layer comprises sodium ferrous sulfate, and the material of the shell layer is a carbon material. By controlling the thickness of the shell layer and the intensity of a D peak and a G peak in a Raman spectrum of the sodium ferrous sulfate cathode material, the electrical conductivity of the sodium ferrous sulfate cathode material can be effectively improved; and then the capacity of the cathode sheet and the secondary battery is also improved.

In a first aspect, an embodiment of the present application provides a sodium ferrous sulfate cathode material, comprising a core layer and a shell layer, wherein the material of the core layer comprises sodium ferrous sulfate, and the material of the shell layer is a carbon material; the thickness of the shell layer is 2 nm-10 nm, and specifically may be 2.3 nm, 3.3 nm, 3.4 nm, 3.5 nm, 4.9 nm, 5.4 nm, 5.9 nm, 7.9 nm, etc. and is not limited herein; and the sodium ferrous sulfate cathode material has a D peak and a G peak in the Raman spectrum, and the I_{D}/I_{G} value is (0.8-1):1, and may specifically be 0.953:1, 0.961:1, 0.962:1, 0.968:1, 0.978:1, 0.987:1, 0.991:1, etc. and is not limited herein.

In the description of the present application, the term "D peak" refers to a peak located near 1350 cm⁻¹ in the Raman spectrum, for example, a peak located in the range of 1200 cm⁻¹ to 1400 cm⁻¹, which is used to characterize defects of the carbon material of the shell layer.

In the description of the present application, the term "G peak" refers to a peak located near 1580 cm⁻¹ in the Raman spectrum, for example, a peak located in the range of 1500 cm⁻¹ to 1700 cm⁻¹, which is used to characterize the degree of graphitization of the carbon material of the shell layer.

In the description of the present application, the term "I_{D}/I_{G}" refers to the ratio of the intensity of the D peak to that of the G peak in the Raman spectrum.

In the technical solutions of the embodiments of the present application, by controlling the thickness of the shell layer, on the one hand, the conductivity of the sodium ferrous sulfate cathode material can be improved by using the carbon material, and on the other hand, sodium ions can also have good diffusion in the sodium ferrous sulfate cathode material. In addition, by controlling the I_{D}/I_{G} value, the sodium ferrous sulfate cathode material has a high degree of graphitization, and has a better conductivity.

Further, in some embodiments, the thickness of the shell layer is 2 nm-5 nm.

In the technical solutions of the embodiments of the present application, by further controlling the thickness of the shell layer, the charge specific capacity and discharge specific capacity of the battery having the sodium ferrous sulfate cathode material can be further improved.

Further, in some embodiments, the I_{D}/I_{G} value in the Raman spectrum of the sodium ferrous sulfate cathode material is (0.9-1):1.

In the technical solutions of the embodiments of the present application, by selecting the I_{D}/I_{G} value, the sodium ferrous sulfate cathode material has better wettability with an electrolyte when applied to a battery, and the sodium ferrous sulfate cathode material has a relatively large specific surface area and a high ion transport rate, which helps to further improve the charge specific capacity and discharge specific capacity of the battery using the sodium ferrous sulfate cathode material.

Further, in some embodiments, the D50 particle size of the sodium ferrous sulfate cathode material is 0.5 µm-5 µm, may specifically be 1.27 µm, 2.39 µm, 2.42 µm, 2.49 µm, 2.87 µm, 3.61 µm, etc. and is not limited herein; and the BET specific surface area is 10 m²/g-25 m²/g, may specifically be 12.4 m²/g, 15.4 m²/g, 16.8 m²/g, 20.4 m²/g, 21.8 m²/g, etc. and is not limited herein.

In the description of the present application, the term "D50 particle size" refers to the particle size corresponding to the case where the cumulative particle size distribution percentage of the sample reaches 50%, that is, the proportion of particles with a particle size larger than it is 50%, and the proportion of particles with a particle size smaller than it is also 50%.

In the technical solutions of the embodiments of the present application, controlling the D50 particle size of the sodium ferrous sulfate cathode material is beneficial for increasing the compaction density of the sodium ferrous sulfate cathode material, and then improving the energy density of a battery prepared by the sodium ferrous sulfate cathode material; in addition, controlling the BET specific surface area thereof is beneficial for preparing a uniform cathode slurry, and greatly helps to improve the comprehensive electrochemical performance of the cathode sheet and the secondary battery.

Further, in some embodiments, in the sodium ferrous sulfate cathode material, the mole ratio of sodium element to that of iron element is (2-2.5):1, may specifically be 2.05:1, 2.08:1, 2.1:1, etc. and is not limited herein.

Further, in some embodiments, the material of the core layer of the sodium ferrous sulfate cathode material is sodium ferrous sulfate, the chemical formula of the sodium ferrous sulfate cathode material is NaₓFe_{y}(SO₄)_{z}@C, the material of the core layer thereof is NaₓFe_{y}(SO₄)_{z}, and the material of the shell layer is C, wherein 2 ≤ x ≤ 2.5, 1 ≤ y ≤ 1.25, and 2 ≤ z ≤ 2.5, for example, the material of the core layer may be Na₂Fe(SO₄)₂, etc.

**In** the technical solutions of the embodiments of the present application, a sodium ferrous sulfate cathode material with fewer defects and better structural integrity can be prepared by controlling the mole ratio of sodium element to that of iron element, which helps to improve the change specific capacity and discharge specific capacity. In addition, the slurry prepared by using the sodium ferrous sulfate cathode material has higher stability, and is easy to be coated and processed.

According to a second aspect, an embodiment of the present application provides a method for preparing a sodium ferrous sulfate cathode material, comprising the following steps:
subjecting a sodium sulfate-based organic material or a mixture of the sodium sulfate-based organic material and a carbon source to first calcination to obtain a carbon coating material; wherein the sodium sulfate-based organic material has an alkyl group;
mixing the carbon coating material and a ferrous salt to obtain a mixed material; and
subjecting the mixed material to second calcination to obtain the sodium ferrous sulfate cathode material;
wherein the carbon source is selected from carbon materials different from the sodium sulfate-based organic material; and
the sodium ferrous sulfate cathode material comprises a core layer and a shell layer, wherein the material of the core layer comprises sodium ferrous sulfate, the material of the shell layer is a carbon material; the thickness of the shell layer is 2 nm-10 nm, the Raman spectrum of the sodium ferrous sulfate cathode material has a D peak and a G peak, and the I_{D}/I_{G} value is (0.8-1):1.

**In** the technical solutions of the embodiments of the present application, a shell layer with good uniformity and a high degree of graphitization can be formed in situ on the surface of sodium sulfate by performing a first calcination on a sodium sulfate-based organic material or a mixture of the sodium sulfate-based organic material and a carbon source; and by means of two calcinations, on the one hand, the thickness of the shell layer can be ensured, and on the other hand, the ferrous salt and the carbon coating material can fully undergo a solid phase reaction, so as to generate a sodium ferrous sulfate material with a stable core layer, thereby improving the stability of the sodium ferrous sulfate cathode material.

Further, in some embodiments, the sodium sulfate-based organic material is sodium alkyl sulfate having 10-20 carbon atoms.

In the technical solutions of the embodiments of the present application, selecting sodium alkyl sulfates having 10-20 carbon atoms can form a carbon-coated sodium sulfate material in situ in the first calcination process, which has fewer impurities and a good coating effect.

Further, in some embodiments, the temperature of the first calcination is 600 °C-700 °C, may specifically be 600 °C, 670 °C, 700 °C, etc. and is not limited herein, and the temperature holding time of the first calcination is 2 h-4 h, may specifically be 2 h, 3 h, 4 h, etc. and is not limited herein; and after the first calcination, the carbon coating material is discharged after the temperature thereof is reduced to ≤ 120 °C.

In the technical solutions of the embodiments of the present application, controlling the conditions of the first calcination is beneficial for fully decomposing sodium alkyl sulfate, forming a carbon coating layer in situ on the surface of sodium sulfate, and improving the conductivity of the sodium ferrous sulfate cathode material.

Further, in some embodiments, the temperature of the second calcination is 300 °C-350 °C, may specifically be 300 °C, 330 °C, 350 °C, etc. and is not limited herein, and the temperature holding time of the second calcination is 20 h-30 h, may specifically be 20 h, 25 h, 30 h, etc. and is not limited herein; and after the second calcination, the sodium ferrous sulfate cathode material is discharged after the temperature is reduced to ≤ 100 °C.

In the technical solutions of the embodiments of the present application, controlling the conditions of the second calcination is beneficial for further improving the charge specific capacity and discharge specific capacity of a battery using the sodium ferrous sulfate cathode material.

Further, in some embodiments, the heating rate of the first calcination is 4 °C/min-6 °C/min, may specifically be 4 °C/min, 5 °C/min, 6 °C/min, etc. and is not limited herein; the heating rate of the second calcination is 1 °C/min-2 °C/min, may specifically be 1 °C/min, 2 °C/min, etc. and is not limited herein; the first calcination and the second calcination are performed in an inert atmosphere, the oxygen content in the first calcination process is controlled to be lower than 50 ppm, and the oxygen content in the second calcination process is controlled to be lower than 5 ppm; and the inert atmosphere includes, but is not limited to, nitrogen, argon, helium or mixtures thereof, etc.

**In** the technical solutions of the embodiments of the present application, the heating rate mainly influences the preparation rate and the uniformity of components of the sodium ferrous sulfate cathode material, and heating under the described conditions can uniformly heat the inside and the outside of the subject to be calcined, which helps to prepare a sodium ferrous sulfate cathode material with more uniform components and better comprehensive performance.

Further, in some embodiments, the ambient humidity during the first calcination is controlled to be within 5%-10%, and the ambient humidity during the second calcination is controlled to be 5% or less.

**In** the technical solutions of the embodiments of the present application, the loss of carbon is reduced by controlling the ambient humidity.

Further, in some embodiments, the carbon coating material and the ferrous salt are mixed and then subjected to pulverization treatment, and the particle size of the material after the pulverization treatment is 1 µm-3 µm, may specifically be 1 µm, 2.1 µm, 3 µm, etc. and is not limited herein.

In the technical solutions of the embodiments of the present application, in the embodiments, by controlling the particle size of the material, the diffusion path of ferrous ions can be shortened, and it is easier to prepare a sodium ferrous sulfate cathode material in which the core layer comprises sodium ferrous sulfate and the shell layer is a carbon material, and the conductivity thereof is high.

Further, in some embodiments, the pulverization treatment includes, but is not limited to, grinding, ball milling, air-flow pulverization, and the like; and specifically, a pulverizer may be used to perform pulverization treatment, and a pulverization gas source is nitrogen gas having a pressure of 0.3 MPa-0.5 MPa, a dew point of -60 °C or less, and an oxygen content of 1 ppm or less.

Further, in some embodiments, the pulverized material is delivered to the material mixer via a pipeline for mixing, and the time for mixing is 60 min-120 min, so as to obtain a mixed material with evenly distributed components.

Further, in some embodiments, after the second calcination ends, demagnetization is performed under constant temperature and constant humidity conditions to obtain a sodium ferrous sulfate cathode material.

In the technical solutions of the embodiments of the present application, the content of impurities in the sodium ferrous sulfate cathode material can be reduced by demagnetization.

Further, in some embodiments, the sodium alkyl sulfate having 10-20 carbon atoms is at least one of sodium dodecyl sulfate, sodium cetyl sulfate, sodium octadecyl sulfate, and sodium eicosyl sulfate, and more preferably is sodium dodecyl sulfate, sodium cetyl sulfate, and sodium octadecyl sulfate; and the purity of the sodium alkyl sulfate having 10-20 carbon atoms used is ≥ 99%, and the sodium alkyl sulfate is obtained by purifying a technical grade sodium alkyl sulfate having 10-20 carbon atoms. The purification method is as follows:
adding a technical grade sodium alkyl sulfate having 10-20 carbon atoms to ethanol of which the temperature is 50 °C-70 °C for dissolution, in which the mass ratio of the sodium alkyl sulfate having 10-20 carbon atoms to ethanol is 1: (5-10), then performing demagnetization until the content of magnetic substances in the solution is less than 0.5 ppm, then stopping demagnetization, and then cooling, filtering and drying to obtain a purified sodium alkyl sulfate having 10-20 carbon atoms; and further, stopping demagnetization after the content of the magnetic substances in the solution is less than 0.05 ppm, the content of the magnetic substances in the sodium alkyl sulfate having 10-20 carbon atoms after purification being less than 0.2 ppm.

Taking the purification of a technical grade sodium dodecyl sulfate as an example, the technical grade sodium dodecyl sulfate is purified using the described method, and the content of the magnetic substances thereof can be reduced from 6.7 ppm to 0.12 ppm.

**In** the technical solutions of the embodiments of the present application, by selecting the described materials for the first calcination, a carbon-coated sodium sulfate material with a moderate thickness of the carbon shell layer can be generated in situ, and the thickness uniformity of the carbon shell layer is good.

By adding a carbon source and controlling the amount thereof, the wettability of the electrolyte to the sodium ferrous sulfate cathode material is improved, and the ion transport rate is improved. In addition, the erosion of the electrolyte to the sodium ferrous sulfate cathode material can be reduced, and the cycle performance thereof is improved.

In some embodiments, the carbon source is at least one of glucose, sucrose, water soluble starch, and fructose.

Further, in some embodiments, the ferrous salt is at least one of ferrous acetate and ferrous oxalate.

In the technical solutions of the embodiments of the present application, when a sodium ferrous sulfate cathode material is prepared by using the above-mentioned ferrous salt, carbon dioxide is formed when acetate and oxalate are calcinated for the second time, no other impurities are introduced, and the prepared sodium ferrous sulfate cathode material has good conductivity.

In a third aspect, an embodiment of the present application provides a cathode sheet, comprising the sodium ferrous sulfate cathode material of the first aspect or the sodium ferrous sulfate cathode material prepared by using the preparation method of the second aspect.

In a fourth aspect, an embodiment of the present application provides a secondary battery, comprising the cathode sheet of the third aspect.

Some specific embodiments are listed below. It should be noted that the embodiments described below are exemplary, and are only used to explain the present application, and cannot be construed as limitations to the present application. If no specific techniques or conditions are specified in the examples, the methods or conditions described in the literature in the art or in the product instructions shall be followed. The reagents or instruments used are not noted by manufacturers, and are all commercially available conventional products.

### I. Preparation method

The sodium alkyl sulfate having 10-20 carbon atoms used in the examples and comparative examples is obtained by purifying a technical grade sodium alkyl sulfate having 10-20 carbon atoms. The purification method comprises: adding a technical grade sodium alkyl sulfate having 10-20 carbon atoms into ethanol with a temperature of 50 °C-70 °C for dissolution, wherein the mass ratio of the sodium alkyl sulfate having 10-20 carbon atoms to ethanol is 1: (5-10), then transporting the mixture to a permanent magnet iron remover via a pump for cyclic demagnetization, stopping the cyclic demagnetization until the content of the magnetic substance in the solution is less than 0.05 ppm, then cooling until the temperature of the solution is 5 °C-15 °C, and filtering and drying the obtained material to obtain a sodium alkyl sulfate with the purity being greater than or equal to 99% and having 10-20 carbon atoms.

### Example 1

According to an example of a sodium ferrous sulfate cathode material of the present application, a method for preparing the sodium ferrous sulfate cathode material of this example comprises:
(1) introducing nitrogen, such that the oxygen content is 30 ± 10 ppm, performing a first calcination on the sodium dodecyl sulfate (the purity being 99.3%) under the nitrogen atmosphere, wherein the heating rate is 5 °C/min, the temperature of the first calcination is 670 °C, and the temperature holding time of the first calcination is 3 h, and after the temperature of the product obtained by the first calcination is cooled to a temperature of ≤ 120 °C, discharging to obtain a first calcination product (i.e. a carbon coating material); and removing exhaust gas during thermal insulation, and ensuring the humidity to be 8%-8.5%;
(2) mixing the first calcination product and ferrous acetate, and crushing by an airflow crusher until the particle size is 2.1 µm, wherein the gas source for crushing is nitrogen gas at a pressure of 0.41 MPa, a dew point of less than -60°C, and an oxygen content of less than 1 ppm; and after crushing, transporting the resultant to a spiral belt mixer via a pipeline for mixing for 90 min, so as to obtain a mixed material; wherein the mole ratio of sodium element in the first calcination product to that of iron element in ferrous acetate is 2.08:1;
(3) introducing nitrogen gas, such that the oxygen content is less than 5 ppm, subjecting the mixed material to a second calcination, wherein the heating rate is 1.5 °C/min, the temperature of the second calcination is 330 °C, and the temperature holding time of the second calcination is 25 h, and after the temperature of the product subjected to the second calcination is reduced to ≤ 100 °C, discharging to obtain a second calcination product; and removing exhaust gas during thermal insulation, and ensuring the humidity to be 5% or less; and
(4) sieving the second calcination product using a 100-mesh ultrasonic vibration sieve, and demagnetizing the product under a constant temperature and humidity (the temperature being 25 ± 1 °C, and the humidity being ≤ 10%), so as to obtain a sodium ferrous sulfate cathode material.

### Example 2

According to an example of a sodium ferrous sulfate cathode material of the present application, a method for preparing the sodium ferrous sulfate cathode material of this example comprises:
(1) introducing nitrogen, such that the oxygen content is 20 ± 10 ppm, performing a first calcination on the sodium dodecyl sulfate (the purity being 99.1%), wherein the heating rate is 6 °C/min, the temperature of the first calcination is 700 °C, and the temperature holding time of the first calcination is 2 h, and after the temperature of the product obtained by the first calcination is cooled to a temperature of ≤ 120 °C, discharging to obtain a first calcination product; and removing exhaust gas during thermal insulation, and ensuring the humidity to be 6 ± 1%;
(2) mixing the first calcination product and ferrous acetate, and crushing by an airflow crusher until the particle size is 1 µm, wherein the gas source for crushing is nitrogen gas at a pressure of 0.3 MPa, a dew point of less than -60 °C, and an oxygen content of less than 1 ppm; and after crushing, transporting the resultant to a double cone mixer via a pipeline for mixing for 60 min, so as to obtain a mixed material; wherein the mole ratio of sodium element in the first calcination product to that of iron element in ferrous acetate is 2.05:1;
(3) introducing nitrogen gas, such that the oxygen content is less than 5 ppm, subjecting the mixed material to a second calcination, wherein the heating rate is 1 °C/min, the temperature of the second calcination is 300 °C, and the temperature holding time of the second calcination is 30 h, and after the temperature of the product subjected to the second calcination is reduced to ≤ 100 °C, discharging to obtain a second calcination product; and removing exhaust gas during thermal insulation, and ensuring the humidity to be 5% or less; and
(4) sieving the second calcination product using a 80-mesh ultrasonic vibration sieve, and demagnetizing the product under a constant temperature and humidity (the temperature being 25 ± 1 °C, and the humidity being ≤ 10%), so as to obtain a sodium ferrous sulfate cathode material.

### Example 3

According to an example of a sodium ferrous sulfate cathode material of the present application, a method for preparing the sodium ferrous sulfate cathode material of this example comprises:
(1) introducing nitrogen, such that the oxygen content is 40 ± 10 ppm, performing a first calcination on the sodium dodecyl sulfate (the purity being 99.4%), wherein the heating rate is 4 °C/min, the temperature of the first calcination is 600 °C, and the temperature holding time of the first calcination is 4 h, and after the temperature of the product obtained by the first calcination is cooled to a temperature of ≤ 120 °C, discharging to obtain a first calcination product; and removing exhaust gas during thermal insulation, and ensuring the humidity to be 9%-10%;
(2) mixing the first calcination product and ferrous acetate, and crushing by an airflow crusher until the particle size is 3 µm, wherein the gas source for crushing is nitrogen gas at a pressure of 0.5 MPa, a dew point of less than -60 °C, and an oxygen content of less than 1 ppm; and after crushing, transporting the resultant to a tilted mixer via a pipeline for mixing for 120 min, so as to obtain a mixed material; wherein the mole ratio of sodium element in the first calcination product to that of iron element in ferrous acetate is 2.10:1;
(3) subjecting the mixed material to a second calcination under nitrogen atmosphere, wherein the heating rate is 2 °C/min, the temperature of the second calcination is 350 °C, and the temperature holding time of the second calcination is 20 h, and after the temperature of the product subjected to the second calcination is reduced to ≤ 100 °C, discharging to obtain a second calcination product; and removing exhaust gas during thermal insulation, and ensuring the humidity to be 5% or less; and
(4) sieving the second calcination product using a 150-mesh ultrasonic vibration sieve, and demagnetizing the product under a constant temperature and humidity (the temperature being 25 ± 1 °C, and the humidity being ≤ 10%), so as to obtain a sodium ferrous sulfate cathode material.

### Example 4

In an embodiment of a sodium ferrous sulfate cathode material of the present application, the method for preparing the sodium ferrous sulfate cathode material of this example differs from that of Example 1 only in that sodium cetyl sulfate (with a purity of 99.4%) is used to replace sodium dodecyl sulfate.

### Example 5

In an embodiment of a sodium ferrous sulfate cathode material of the present application, the method for preparing the sodium ferrous sulfate cathode material of this example differs from that of Example 1 only in that sodium octadecyl sulfate (with a purity of 99.3%) is used to replace sodium dodecyl sulfate.

### Example 6

In an embodiment of a sodium ferrous sulfate cathode material of the present application, the method for preparing the sodium ferrous sulfate cathode material of this example differs from that of Example 1 only in that sodium eicosyl sulfate (with a purity of 99.1%) is used to replace sodium dodecyl sulfate.

### Example 7

In an embodiment of a sodium ferrous sulfate cathode material of the present disclosure, the method for preparing the sodium ferrous sulfate cathode material of this example differs from that of Example 1 only in that the temperature of the first calcination is 700 °C.

### Example 8

According to an embodiment of a sodium ferrous sulfate cathode material of the present application, the method for preparing the sodium ferrous sulfate cathode material of this example differs from that of Example 1 only in that, in step (2), ferrous acetate is added in a mole ratio of sodium element in the product obtained by the first calcination to that of iron element in ferrous acetate of 2.5:1.

### Example 9

According to an embodiment of a sodium ferrous sulfate cathode material of the present application, the method for preparing the sodium ferrous sulfate cathode material of this example differs from that of Example 1 only in that, in step (2), ferrous acetate is added in a mole ratio of sodium element in the product obtained by the first calcination to that of iron element in ferrous acetate of 1.5:1.

### Example 10

According to an embodiment of a sodium ferrous sulfate cathode material of the present application, the method for preparing the sodium ferrous sulfate cathode material of this example differs from that of Example 1 only in that, in step (2), ferrous acetate is added in a mole ratio of sodium element in the product obtained by the first calcination to that of iron element in ferrous acetate of 3:1.

### Comparative Example 1

A sodium ferrous sulfate cathode material. A method for preparing the sodium ferrous sulfate cathode material comprises:
mixing glucose, ferrous acetate, and sodium sulfate at a mole ratio of 0.18:2.05:1, then heating to 700 °C at a rate of 6 °C/min under a nitrogen atmosphere, maintaining the temperature at 700 °C for 2 h, and ensuring that the humidity is within 5%; then, sieving the calcined product using a 80 mesh ultrasonic vibration sieve, performing demagnetization in a constant temperature and constant humidity room (the temperature being 25±1 °C, and the humidity being ≤ 10%), so as to obtain a sodium ferrous sulfate cathode material.

### II. Test methods

### 1. Property test of sodium ferrous sulfate cathode material

1) Surface morphology: observing the surface morphology of a sodium ferrous sulfate cathode material using SEM and TEM;
2) Shell thickness: observing using TEM;
3) Compaction density: using a compaction density meter for test, wherein the test pressure is 3T and the pressing time is 30s;
4) Tap density: using a tap density meter, wherein the number of vibrations is 5000;
5) BET: using a BET tester for tests, and using a nitrogen adsorption method;
6) D50 particle size: using a laser granulometer for tests;
7) I_{D}/I_{G} value: testing a Raman spectrogram of a sample to be tested, and calculating the I_{D}/I_{G} value according to the intensity I_{D} of a D peak and the intensity I_{G} of a G peak;
8) Powder resistivity: using a four-probe method for tests under conditions of a pressure of 10 MPa;
9) Iron dissolution: adding 1 g of a sample to be tested into 100 mL of a hydrogen fluoride-ethanol solution with the concentration of 0.1 mol/L, stirring and dissolving at a temperature of 45 °C for 30 min, then filtering, and measuring the content of iron element in the obtained filtrate, i.e. the iron dissolution.

### 2. Property tests of battery

A sodium ferrous sulfate cathode material, polyvinylidene fluoride, and conductive carbon black were mixed in a mass ratio of 85:7:8, the mixture was coated on an aluminium foil, and then an electrode sheet was prepared at a compacted density of 2.2 g/mL. A sodium sheet was used as the anode, and a sodium perchlorate solution of 1 mol/L was used as the electrolyte to assemble a button battery. The button batter was tested in an environment of 25 ± 0.1 °C.

Charge and discharge tests were respectively performed at a rate of 0.1 C and 0.5 C by using a constant current charge and discharge mode, wherein the charge cut-off voltage is 4.5 V and the discharge cut-off voltage is 2.0 V; and the first charge specific capacity and the first discharge specific capacity of each battery were tested.

### III. Test results analysis of Examples and Comparative Example

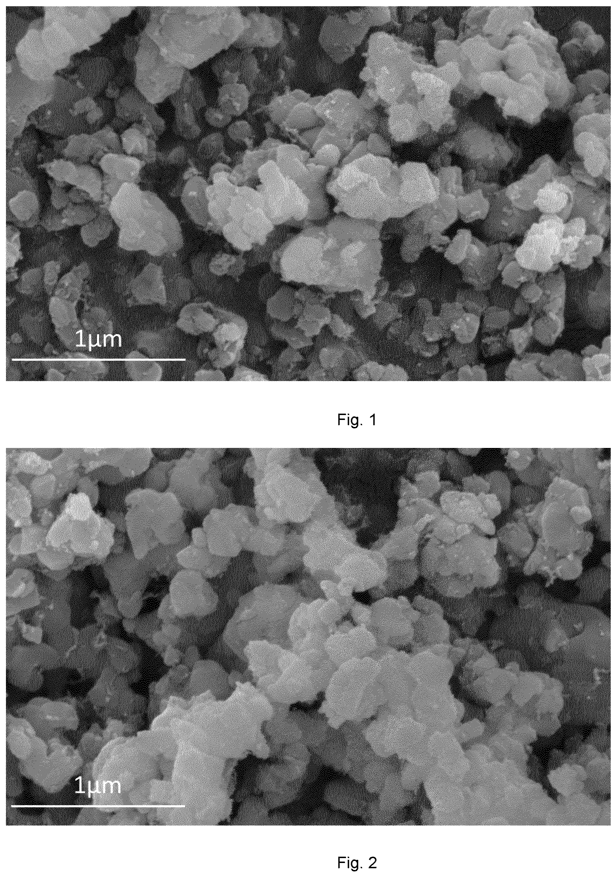

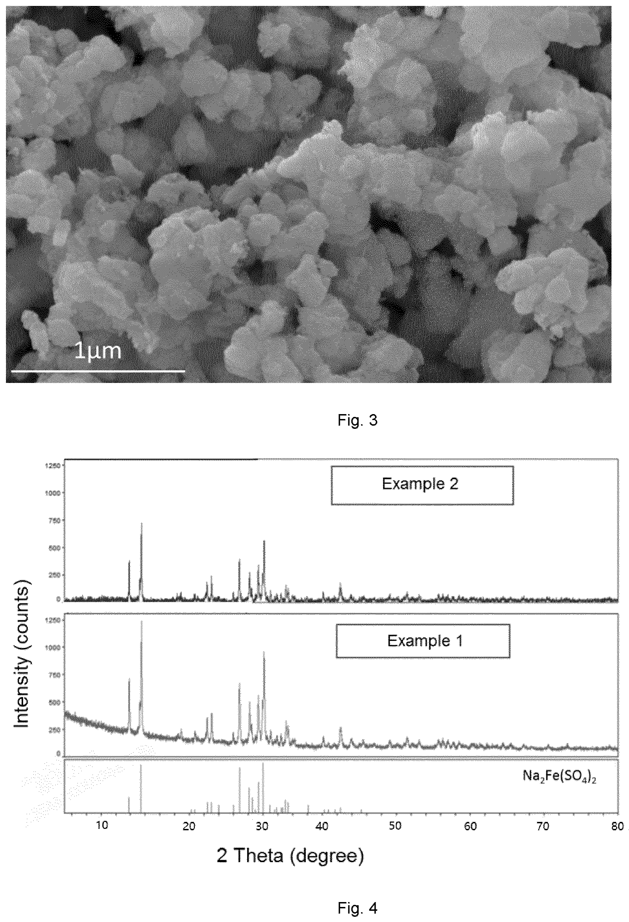

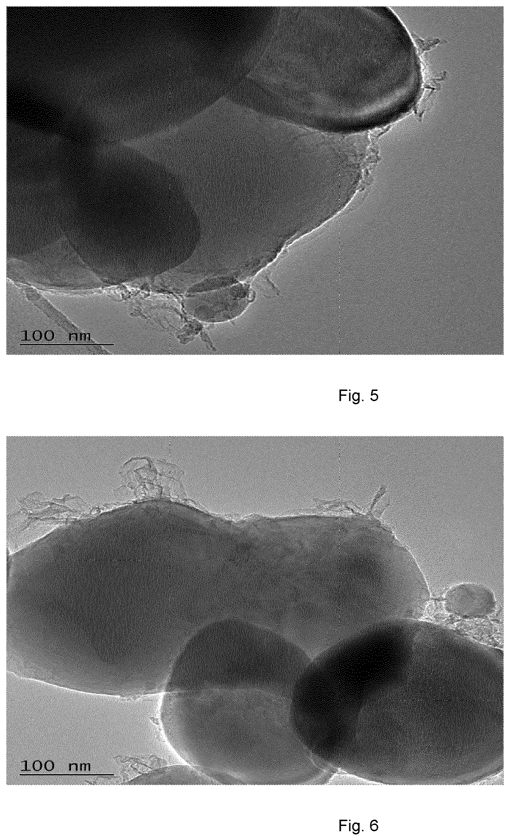

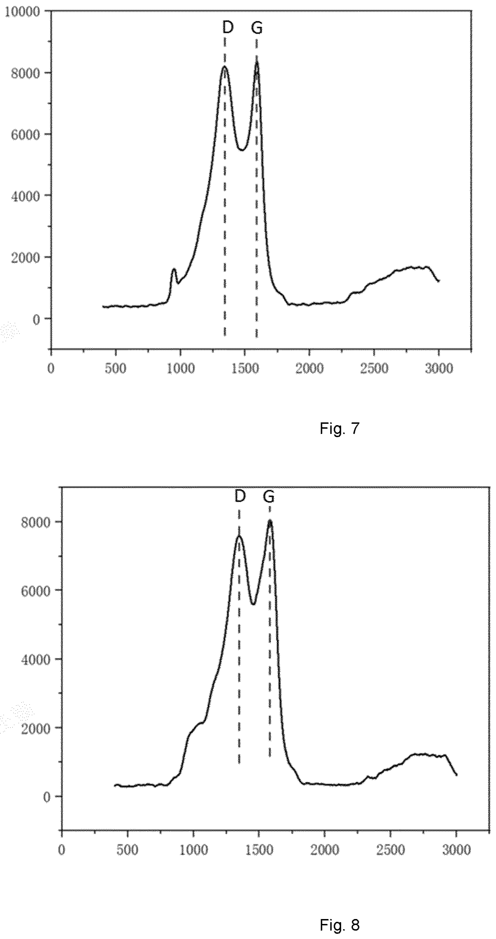

Fig. 1 to Fig. 3 are SEM images of surfaces of the sodium ferrous sulfate cathode materials in Example 1 to Example 3, respectively. It can be determined from Fig. 1 to Fig. 3 that the particle size of the iron sodium sulfate cathode materials disclosed in the present application is relatively uniform, and is in the form of cubelike particles. Fig. 4 is an XRD pattern of the sodium ferrous sulfate cathode material in Example 1 to Example 2. It can be determined from the pattern that the obtained crystal has a good structural integrity and no other impurity phase is generated. Fig. 5 and Fig. 6 are TEM patterns of the sodium ferrous sulfate cathode materials in Example 1 and Example 2. It can be determined from Figs. 5 and 6 that an obvious carbon coating layer exists, and the carbon coating layer is dense and free of flocculent carbon and floating carbon. Fig. 7 and Fig. 8 are Raman spectra of the sodium ferrous sulfate cathode materials in Example 1 and Example 2. It can be determined from Fig. 7 and Fig. 8 that both the I_{D}/I_{G} values of the sodium ferrous sulfate cathode materials in Example 1 and Example 2 are smaller than 1, and the degree of graphitization is relatively high, indicating good electronic conductivity.

Table 1 is a table of the property test results of the sodium ferrous sulfate cathode materials in the Examples and Comparative Example.

**Table 1**

| Item | Shell thickness ( Nm) | I_{D}/I_{G} value | Compaction density (g/mL) | Tap density (g/mL) | BET specific surface area (m²/g) | D50 particle size (µm) | powder resistivity (Ω·cm) | iron dissolution (ppm) |
|---|---|---|---|---|---|---|---|---|
| Example 1 | 3.5 | 0.965 | 2.2 | 1.1 | 16.8 | 2.48 | 12.5 | 314 |
| Example 2 | 2.3 | 0.953 | 2.1 | 1.1 | 18.4 | 1.27 | 10.8 | 345 |
| Example 3 | 4.9 | 0.987 | 2.2 | 1.2 | 12.4 | 3.61 | 13.1 | 278 |
| Example 4 | 5.4 | 0.961 | 2.2 | 1.1 | 19.4 | 2.42 | 13.2 | 332 |
| Example 5 | 5.9 | 0.978 | 2.2 | 1.1 | 20.4 | 2.56 | 12.3 | 321 |
| Example 6 | 7.9 | 0.987 | 2.2 | 1.1 | 21.8 | 2.65 | 12.9 | 325 |
| Example 7 | 3.9 | 0.892 | 2.1 | 1.2 | 23.7 | 2.87 | 18.9 | 338 |
| Example 8 | 3.4 | 0.961 | 2.2 | 1.1 | 15.4 | 2.42 | 13.8 | 302 |
| Example 9 | 3.3 | 0.962 | 2.2 | 1.2 | 16.9 | 2.49 | 12.1 | 385 |
| Example 10 | 3.4 | 0.968 | 2.2 | 1.1 | 17.3 | 2.39 | 14.2 | 339 |
| Comparative Example 1 | 9.7 | 1.35 | 2.0 | 1.0 | 25.8 | 2.41 | 25.9 | 329 |

It can be determined from Table 1 that all of the I_{D}/I_{G} values of the sodium ferrous sulfate cathode material manufactured by using the method in the examples of the present application are smaller than 1, so that the degree of graphitization is high, which helps to improve the conductivity of the sodium ferrous sulfate cathode material and improve the electrochemical properties thereof. It can be found by comparing the test results of Example 1 and Example 7 that when the first calcination temperature increases, the I_{D}/I_{G} value decreases and the degree of graphitization increases.

In Comparative Example 1, the sodium alkyl sulfate having 10-20 carbon atoms is not used, the carbon coating effect is relatively poor, the I_{D}/I_{G} value of the prepared iron sodium sulfate cathode material is high, and the degree of graphitization is low.

Table 2 shows test results of the first charge specific capacity and the first discharge specific capacity of the batteries made of the sodium ferrous sulfate cathode materials in the Examples and Comparative Example at a rate of 0.1 C and 0.5 C.

**Table 2**

| Item | 0.1C | | 0.5C | |
|---|---|---|---|---|
| | First charge specific capacity (mAh/g) | First discharge specific capacity (mAh/g) | First charge specific capacity (mAh/g) | First discharge specific capacity (mAh/g) |
| Example 1 | 89.1 | 83.2 | 83.8 | 77.4 |
| Example 2 | 89.5 | 82.9 | 83.9 | 76.9 |
| Example 3 | 88.4 | 83.5 | 84.5 | 77.1 |
| Example 4 | 88.2 | 82.7 | 83.0 | 76.5 |
| Example 5 | 88.3 | 82.5 | 83.2 | 76.8 |
| Example 6 | 88.6 | 82.1 | 82.1 | 76.3 |
| Example 7 | 88.1 | 82.3 | 82.2 | 76.1 |
| Example 8 | 87.8 | 81.9 | 81.8 | 75.1 |
| Example 9 | 87.6 | 81.8 | 82.1 | 74.3 |
| Example 10 | 88.1 | 82.1 | 81.5 | 74.6 |
| Comparative Example 1 | 87.3 | 81.4 | 80.1 | 72.6 |

By comparing the test results of Example 1 and Examples 4, 5 and 6, it can be found that, when the sodium alkyl sulfate having 10-20 carbon atoms is at least one of sodium dodecyl sulfate, sodium cetyl sulfate and sodium octadecyl sulfate, the charge specific capacity and the discharge specific capacity thereof are higher, the rate performance is better, and the reason may be that the carbon coating layer of the sodium ferrous sulfate cathode material prepared by using the described raw materials has a moderate thickness. In addition, it can be found by comparing the test results of Example 1 and Comparative Example 1 that the properties of the sodium ferrous sulfate cathode material obtained by mixing a common sodium source and a carbon source are not as good as the properties of the sodium ferrous sulfate cathode material obtained by an alkyl sodium sulfate having 10-20 carbon atoms as a carbon source to form a coated layer in situ, the degree of graphitization is low, and the improvement effect on the electrochemical properties is limited.

By comparing the test results of Example 1 and Example 7, it can be found that the highest degree of graphitization is not the best, and when the I_{D}/I_{G} value is (0.9-1):1, the charge specific capacity, the discharge specific capacity, and the rate performance of the sodium ferrous sulfate cathode material are all improved.

By comparing the test results of Example 1 and Examples 8-10, it can be found that when the ratio of the amount of substance of sodium element to that of iron element in the ferrous salt in the first calcination product is (2-2.5):1, the charge specific capacity and the discharge specific capacity are higher, and the electrochemical properties are better.

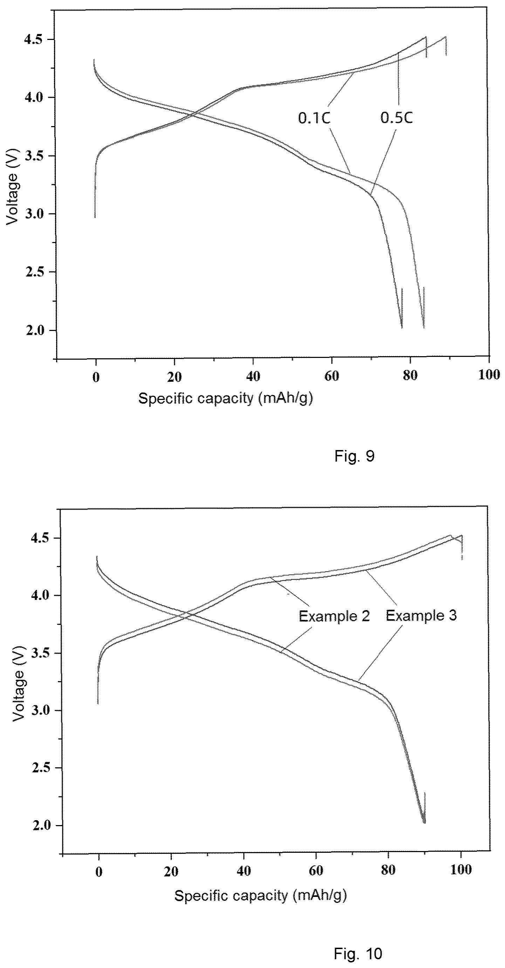

Fig. 9 is a diagram of the test results of the charge specific capacity and the discharge specific capacity of a battery prepared from the sodium ferrous sulfate cathode material in Example 1 at a rate of 0.1 C and 0.5 C, Fig. 10 is a diagram of test results of the charge specific capacity and the discharge specific capacity of batteries prepared from the sodium ferrous sulfate cathode materials in Example 2 and Example 3 at a rate of 0.1C. The test results are consistent with Table 2, indicating that the charge specific capacity and the discharge specific capacity of the sodium ferrous sulfate cathode materials in the examples of the present application are relatively high, and the rate performance is better.

It should be noted that the present application is not limited to the embodiments above. The described embodiments are mere examples, and embodiments having substantially the same configurations and effects as those of the technical idea within the scope of the present application are all included in the technical scope of the present disclosure. It should be noted that various modifications that can be conceived by those skilled in the art can be made to the embodiments without departing from the spirit of the present application, and other embodiments that are constructed by combining some of the components of the embodiments are also included in the scope of the present application.

## Claims

1. A sodium ferrous sulfate cathode material, comprising a core layer and a shell layer, wherein the material of the core layer comprises sodium ferrous sulfate, the material of the shell layer is a carbon material, and a thickness of the shell layer is 2 nm-10 nm; and a Raman spectrum of the sodium ferrous sulfate cathode material has a D peak and a G peak, and the I_{D}/I_{G} value is (0.8-1):1.

2. The sodium ferrous sulfate cathode material according to claim 1, wherein the thickness of the shell layer is 2 nm-5 nm; and/or, and in the Raman spectrum of the sodium ferrous sulfate cathode electrode material, the I_{D}/I_{G} value is (0.9-1):1.

3. The sodium ferrous sulfate cathode material according to claim 1 or 2, wherein the sodium ferrous sulfate cathode material has a D50 particle size of 0.5 µm-5 µm and a BET specific surface area of 10 m²/g-25 m²/g.

4. The sodium ferrous sulfate cathode material according to claim 1, wherein in the sodium ferrous sulfate cathode material, the mole ratio of sodium element to that of iron element is (2-2.5):1.

5. A preparation method for the sodium ferrous sulfate cathode material, comprising the following steps:
subjecting a sodium sulfate-based organic material or a mixture of the sodium sulfate-based organic material and a carbon source to first calcination to obtain a carbon coating material, the sodium sulfate-based organic material having an alkyl group;
mixing the carbon coating material and a ferrous salt to obtain a mixed material; and
subjecting the mixed material to second calcination to obtain the sodium ferrous sulfate cathode material;
wherein the carbon source is selected from carbon materials different from the sodium sulfate-based organic material; and
the sodium ferrous sulfate cathode material comprises a core layer and a shell layer, the material of the core layer comprises sodium ferrous sulfate, the material of the shell layer is a carbon material, the thickness of the shell layer is 2 nm-10 nm, the Raman spectrum of the sodium ferrous sulfate cathode material has a D peak and a G peak, and the I_{D}/I_{G} value is (0.8-1):1.

6. The preparation method for the sodium ferrous sulfate cathode material according to claim 5, wherein the sodium sulfate-based organic material is sodium alkyl sulfate having 10-20 carbon atoms.

7. The preparation method for the sodium ferrous sulfate cathode material according to claim 6, wherein,
a temperature for the first calcination is 600°C-700°C, and a temperature holding time for the first calcination is 2 h-4 h; and a temperature for the second calcination is 300°C-350°C, and a temperature holding time for the second calcination is 20 h-30 h; and/or
a heating rate for the first calcination is 4°C/min-6°C/min, a heating rate for the second calcination is 1°C/min-2°C/min, and the first calcination and the second calcination are carried out in an inert atmosphere; and/or
the ambient humidity of the first calcination is 5%-10%; and/or, before the second calcination, the mixed material is subjected to a pulverization treatment, and the particle size of the mixed material after the pulverization treatment is 1 µm-3 µm.

8. The preparation method for the sodium ferrous sulfate cathode material according to any one of claims 5 to 7, wherein the sodium alkyl sulfate having 10-20 carbon atoms is at least one of sodium dodecyl sulfate, sodium cetyl sulfate, sodium octadecyl sulfate, and sodium eicosyl sulfate; and/or the carbon source is at least one of glucose, sucrose, water-soluble starch, and fructose; and/or the ferrous salt is at least one of ferrous acetate and ferrous oxalate.

9. A cathode sheet, comprising a current collector, a cathode active material, a conductive agent, and a binding agent, wherein the cathode active material comprises the sodium ferrous sulfate cathode material according to any one of claims 1 to 4 or the sodium ferrous sulfate cathode electrode material prepared by the preparation method for the sodium ferrous sulfate cathode electrode material according to any one of claims 5 to 8.

10. A secondary battery, comprising a cathode sheet, a separator, an electrolyte, and a negative electrode sheet, wherein the cathode sheet is the cathode sheet according to claim 9.
